# EUROPÄISCHE PATENTANMELDUNG

(11) **EP 1 139 075 A2**
(43) Veröffentlichungstag der Anmeldung: **04.10.2001**
(21) Anmeldenummer: 01107008.3
(22) Anmeldetag: 21.03.2001
(51) Int. Cl.: G01F 23/296, G01F 23/00

(54) **Verfahren und Vorrichtung zum Messen eines durch Betriebsverbrauch sich ändernden Füllstandes einer Flüssigkeit in einem Behälter**

(30) Priorität: 27.03.2000 DE 10015217; 08.12.2000 DE 10061531
(71) Anmelder: Robert Seuffer GmbH & Co., 75365 Calw-Hirsau (DE)
(72) Erfinder: Plener, Helmut, 81249 München (DE); Schaller, Martin, 75196 Remchingen (DE); Troppert, Horst, 71139 Ehningen (DE)
(74) Vertreter: Nöth, Heinz, Dipl.-Phys.

(57) **Zusammenfassung**

Ein Verfahren und eine Vorrichtung zum Messen eines durch Betriebsverbrauch sich ändernden Füllstandes einer Flüssigkeit 11 in einem Behälter 1, wobei in bestimmten zeitlichen Abständen ein Abfragesignal in das Behälterinnere gesendet und ein Antwortsignal empfangen und für eine Anzeige ausgewertet wird, und ferner ein jeweils empfangenes Antwortsignal mit in einem Speicher 5 gespeicherten Antwortsignalen, die bestimmten Füllständen entsprechen, verglichen wird und bei Übereinstimmung ein dem Füllstand dieses gespeicherten Antwortsignales entsprechendes Anzeigesignal für eine Anzeigevorrichtung 8 gebildet wird. Bei Nichtübereinstimmung von empfangenem Antwortsignal und gespeichertem Antwortsignal wird ein betriebsabhängiger Flüssigkeitsverbrauch errechnet und vom zuletzt ermittelten Füllstand, bei welchem das empfangene Antwortsignal und das gespeicherte Antwortsignal übereinstimmten, für die entsprechende Anzeige subtrahiert.

## Beschreibung

### [Beschreibung]

Die Erfindung betrifft ein Verfahren nach dem Oberbegriff des Patentanspruches 1 und eine Vorrichtung nach dem Oberbegriff des Patentanspruches 9.

### [Stand der Technik]

Ein derartiges Verfahren und eine derartige Vorrichtung sind aus der US 4,815,323 bekannt. Beim bekannten Verfahren und bei der bekannten Vorrichtung werden an einem Flüssigkeitsbehälter mehrere akustische Wandler, insbesondere Ultraschallwandler angeordnet, welche akustische Abfragesignale in das Behälterinnere aussenden und im Behälter reflektierte Antwortsignale empfangen. Diese werden in einer Auswerteeinrichtung zur Bildung eines Anzeigesignals für den Füllstand der Flüssigkeit im Behälter ausgewertet und an einer Anzeigeeinrichtung angezeigt. Um eine Schräglage des Flüssigkeitsbehälters bei der Füllstandsmessung zu berücksichtigen, sind mehrere die Ultraschallwandler beinhaltende Messanordnungen am Behälter, bevorzugt am Behälterboden, vorgesehen.

### [Aufgabe der Erfindung]

Aufgabe der Erfindung ist es, ein Verfahren und eine Vorrichtung der eingangs genannten Art zu schaffen, bei welcher der Messaufwand verringert ist.

Diese Aufgabe wird erfindungsgemäß beim Verfahren durch die kennzeichnenden Merkmale des Patentanspruches 1 und bei der Vorrichtung durch die kennzeichnenden Merkmale des Patentanspruches 9 gelöst.

Die Unteransprüche beinhalten vorteilhafte Weiterbildungen der Erfindung.

Bei der Erfindung werden Messwerte, welche von der Messanordnung geliefert werden, auf ihre Plausibilität hin überprüft. Wenn ein plausibler Messwert vorliegt, wird dieser ausgewertet und in ein für die Anzeige geeignetes Anzeigesignal gewandelt. Wenn von der Messanordnung kein plausibler Wert geliefert wird, führt die Auswerteelektronik eine Prognoseroutine durch zur Ermittlung eines vom jeweiligen Betrieb abhängigen Flüssigkeits-, insbesondere Kraftstoffverbrauchs. Für die Durchführung der Prognoseroutine werden betriebsabhängige, insbesondere vom Fahrbetrieb des Fahrzeugs abhängige Parameter zur Verfügung gestellt, aus denen ein Durchschnittsverbrauch sich bestimmen lässt, der der Prognoseroutine zugrundegelegt wird. Hierzu können maximale Verbrauchswerte festgelegt werden und entsprechende Verbrauchskurven berechnet werden. Sobald ein neuer plausibler Messwert vorliegt, bildet dieser die Ausgangsgröße für eine erneute Prognoseroutine beim Vorliegen nicht plausibler Messwerte.

Hierzu werden in bestimmten zeitlichen Abständen, welche einige Millisekunden bis einige Sekunden betragen können, Abfragesignale von einem Sender in das Behälterinnere ausgesendet und jeweilige Antwortsignale (Echosignale), welche aus Reflexionen des Abfragesignals im Behälterinnern resultieren, empfangen. Die Antwortsignale werden durch den jeweiligen Flüssigkeitspegel, den die Flüssigkeit mit ihrer Oberfläche im Behälter einnimmt, durch Reflexion an der Flüssigkeitsoberfläche beeinflusst. Bei einem Ausführungsbeispiel werden die jeweils empfangenen Antwortsignale mit gespeicherten Antwortsignalen verglichen, um festzustellen, ob von der Messelektronik plausible Werte vorliegen oder nicht. Die gespeicherten Antwortsignale entsprechen bestimmten unterschiedlichen Füllständen (Flüssigkeitsvolumina) der Flüssigkeit im Behälter. Diese gespeicherten Antwortsignale entsprechen Füllständen, bei denen die Flüssigkeitsoberfläche im wesentlichen in allen Bereichen ihrer Oberfläche einen gleichen Abstand zu einem Nullpegel des Behälters, insbesondere zum Boden des Behälters, in welchen die Messanordnung (Sender und Empfänger) vorzugsweise angeordnet ist, aufweisen. Ein derartiger Zustand der Flüssigkeit ergibt sich insbesondere dann, wenn der Behälter auf oder über einer ebenen Fläche im wesentlichen horizontal angeordnet ist. Vorzugsweise ist der Behälter der Kraftstofftank eines Kraftfahrzeugs. Dieser Ruhezustand ergibt sich beispielsweise beim Parken eines Kraftfahrzeugs auf einer ebenen Fläche, z.B. auf einem Parkplatz oder bei ruhiger Fahrt mit im wesentlichen konstanter Geschwindigkeit auf einer ebenen Fahrbahn. Die bei derartigen Betriebszuständen gewonnenen Messwerte werden als plausible Messwerte erkannt.

Wenn bei einem jeweiligen Messvorgang das empfangene Antwortsignal einem gespeicherten Antwortsignal entspricht, handelt es sich um einen plausiblen Messwert. Von der Auswerteeinrichtung wird ein diesem Antwortsignal bzw. Füllstand entsprechendes Anzeigesignal gebildet und von einer Anzeigeeinrichtung angezeigt.

Wenn das empfangene Antwortsignal mit keinem der gespeicherten Antwortsignale übereinstimmt, liegt kein plausibles Messsignal vor. Es wird dann aus einem betriebsabhängigen Durchschnittsverbrauch, wofür vorzugsweise Maximalwerte festgelegt werden, der Flüssigkeitsverbrauch fortlaufend errechnet und vom zuletzt bei Übereinstimmung der verglichenen Antwortsignale aus diesem plausiblen Messwert bestimmten Füllstand subtrahiert. Eine derartige Nichtübereinstimmung des empfangenen Antwortsignals mit dem gespeicherten Antwortsignalen kann sich betriebsbedingt bei einer Behälterbewegung, beispielsweise durch eine unruhige Fahrt des Kraftfahrzeugs oder bei einer Bergfahrt oder Talfahrt, während welcher der Behälter gegenüber der Waagrechten geneigt angeordnet sind, ergeben. Eine geneigte bzw. schräge Position des Behälters kann sich auch dann ergeben, wenn das Fahrzeug an einer schrägen Fläche beispielsweise einem Berghang oder einer Böschung steht. In diesen Betriebszuständen ergeben sich Antwortsignale, welche in ihrer Form von den Formen der gespeicherten Antwortsignale abweichen. Die Messanordnung erkennt, dass nichtplausible Messwerte vorliegen.

Hierdurch kann unabhängig von der Lage des Fahrzeuges zuverlässig der Füllstand in dem Kraftstofftank ermittelt werden. Die Plausibilität eines Messwertes kann auch in Verbindung mit einem Lagesensor ermittelt werden. Der Füllstand im Kraftstofftank wird auch dabei bei einem horizontal stehenden oder horizontal sich bewegenden Fahrzeug ermittelt und anschließend bei dem sich über ein hügliges Gelände bewegenden Fahrzeug in Abhängigkeit der zurückgelegten Wegstrecke der Füllstand extrapoliert wird. Bei Wiedererreichen einer horizontalen Ebene wird der tatsächliche Füllstand wiederum aus einem plausiblen Messwert ermittelt. Diese Vorgehensweise ist auch bei einer sehr unruhigen Fahrstrecke oder einem eine längere Zeit einen Berganstieg durchfahrenden Fahrzeug dienlich. Weiterhin kann die unerlaubte Entnahme von Kraftstoff überprüft werden, da in Abhängigkeit des gemessenen Füllstandes und der zurückgelegten Fahrstrecke der aktuelle Füllstand berechenbar ist. Weicht dieser von dem Rechner ermittelte Füllstand von dem tatsächlichen Füllstand ab, so liegt eine unzulässige Entnahme vor.

In Abhängigkeit von dem jeweiligen Betriebszustand, den das Fahrzeug aufweist, beispielsweise Berg- oder Talfahrt, Geradeausfahrt auf unruhiger Fahrbahn oder in Abhängigkeit von dem im Getriebe gerade eingelegten Schaltgang und/oder der Motordrehzahl und gegebenenfalls weiterer vom Bordrechner des Fahrzeugs zur Verfügung gestellter Daten, wird der betriebsabhängige Durchschnittsverbrauch der Flüssigkeit bzw. des Kraftstoffs berechnet, wobei ein Maximalwert bestimmt wird. Während der Zeit, während welcher nicht plausible Messwerte vorliegen, wird fortlaufend der Flüssigkeitsverbrauch bestimmt und vom zuletzt aus einem plausiblen Messwert bei Übereinstimmung der verglichenen Antwortsignale bestimmten Füllstand subtrahiert. Hieraus wird dann ein entsprechendes Anzeigesignal für den Füllstand gebildet und angezeigt. Dieser Vorgang erfolgt so lange, bis eine erneute Übereinstimmung des empfangenen Antwortsignals mit einem der gespeicherten Antwortsignale, d.h. ein plausibler Messwert festgestellt wird. Der Füllstand, welcher dem gespeicherten Antwortsignal entspricht, wird dann angezeigt und als gegebenenfalls neue Bezugsgröße bei einer Nichtübereinstimmung der verglichenen Antwortsignale, d.h. bei nichtplausiblen Messwerten als neue Bezugsgröße bei der Berechnung des Verbrauchs unter Zuhilfenahme des betriebsabhängigen Durchschnittsverbrauchs verwendet.

Aus der Form des Antwortsignals bzw. der Antwortsignale (Echosignale) kann in vorteilhafter Weise eine Information über den Zustand des Tankinhaltes gebildet werden. Insbesondere lässt sich aus der Form des jeweiligen Antwortsignals erkennen, ob Wasser in flüssiger Form oder als Eis sich im Tank befindet. Außerdem kann der Zustand des Tankinhaltes, beispielsweise des Kraftstoffes, der sich im Tank befindet, festgestellt werden. Aus der Form des Echosignals kann bestimmt werden, ob der Tankinhalt versulzt ist oder ob Ablagerungen am Tankboden vorhanden sind.

Aus der Form des Antwortsignales, insbesondere aus seiner Breite im Fußbereich des Signals und zusätzlichen Signalspitzen (Echos) lässt sich feststellen, ob Wasser sich im Tank befindet und ob dieses Wasser als Flüssigkeit oder in Form von Eis vorliegt. Hierzu kann gegebenenfalls eine zusätzliche Temperaturmessung durchgeführt werden.

Für diese Zustands- bzw. Qualitätsbestimmung des Tankinhaltes werden vorzugsweise die Antwortsignale verwendet, welche als plausible Messsignale bewertet werden.

Vorzugsweise werden elektroakustische Wandler insbesondere im Ultraschallbereich verwendet, um das Abfragesignal zu bilden und das Antwortsignal auszuwerten.

Der elektroakustische Wandler kann als elektromagnetische Schallquelle, elektrodynamische Schallquelle, elektrostatische Schallquelle oder magnetorestriktive Schallquelle mit jeweils dementsprechend ausgebildetem Schallempfänger gestaltet sein. Im Ultraschallbereich ist es von Vorteil, wenn der elektroakustische als piezoelektrische Schallquelle, insbesondere eine piezoelektrische Ultraschallquelle sowie als piezoelektrischer Schallempfänger, insbesondere piezoelektrischer Ultraschallempfänger ausgebildet ist.

Grundsätzlich können Sender und Empfänger getrennt voneinander angeordnet sein. Eine einfache Montage bei geringer Anzahl von Durchbrechungen in der Wand des Flüssigkeitsbehälters lässt sich dadurch erzielen, dass der Sender und der Empfänger zu einer gemeinsamen Baueinheit zusammengefasst sind.

Grundsätzlich kann der elektroakustische Messwertaufnehmer an einer beliebigen Stelle an dem Flüssigkeitsbehälter angeordnet sein. Sender und Empfänger können an getrennten Orten an der Behälterwand vorgesehen sein. Sender und Empfänger können auch in einer Baueinheit vorgesehen sein. Ferner können Sender und Empfänger von einem einzigen Bauteil, nämlich einer Sender-/ Empfängerbaueinheit gebildet sein. Eine zuverlässige Messung läßt sich dadurch erzielen, dass der Sender und Empfänger in einer Bodenwand des Flüssigkeitsbehälters eingebaut sind. Eine besonders günstige Anordnung ist etwa in der Mitte der Bodenwand des Flüssigkeitsbehälters. Ferner ist es möglich mehrere Sender und Empfänger aufweisende Messeinheiten zu verwenden, die an verschiedenen Stellen der Behälterwand angeordnet sind.

Um die Messung nicht durch Bewegungen der Flüssigkeitsoberfläche, insbesondere beim Füllen des Behälters, insbesondere Kraftstofftankes zu beeinträchtigen, kann weiterhin über der Messeinrichtung bzw. Messanordnung ein sich vorzugsweise bis zur Deckenwand des Flüssigkeitsbehälters erstreckendes Steigrohr vorgesehen ist. Im Inneren des Steigrohres, das mit geeigneten Zuläufen für die im Flüssigkeitsbehälter enthaltene Flüssigkeit versehen ist, entsteht dann eine "beruhigte Zone", die eine von den Bewegungen der Flüssigkeitsoberfläche nur geringfügig oder gar nicht beeinträchtigte Messung ermöglicht. Um das Eindringen der Flüssigkeit in das Steigrohr zu ermöglichen, kann das Steigrohr mit einer Lochung, insbesondere feinen Lochung versehen sein.

Um bei Verwendung eines Steigrohres eine sichere Messung zu ermöglichen, kann weiterhin vorgesehen sein, dass das Steigrohr zumindest einen Innendurchmesser aufweist, der in etwa dem Außendurchmesser der den Sender und Empfänger enthaltenden Messanordnung entspricht.

Zum Auswerten der von der Messanordnung erfassten Werte kann weiterhin eine Auswerteelektronik vorgesehen sein. Die Auswerteelektronik wertet insbesondere die Laufzeit zwischen einem durch eine Schallquelle des elektroakustischen Messwertaufnehmers abgegebenen Sendeimpuls und dem oder den durch einen Schallempfänger des elektroakustischen Messwertaufnehmers aufgenommenen Empfangs- bzw. Echosignalen aus. Die Laufzeit kann beispielweise ein Maß für das Medium bzw. die Flüssigkeit, deren Qualität sowie für das Vorhandensein von Fremdstoffen in dem Flüssigkeitsbehälter sein.

Grundsätzlich kann die Auswerteelektronik getrennt von der Messanordnung angeordnet sein. Um jedoch eine einfache Montage ohne umfangreiche Verkabelung zu ermöglichen, kann die Auswerteelektronik unmittelbar an der Messanordnung vorgesehen sein.

Der Aufbau der Auswerteelektronik kann an die verschiedenen Einsatzbedingungen für das erfindungsgemäße Füllstandsmeßsystem angepasst werden. Als vorteilhaft hat es sich erwiesen, wenn die Auswerteelektronik einen Impulsgenerator, eine Empfangsverstärkerkette, eine Auswerteeinheit und eine serielle Schnittstelle enthält. Um eine genaue Beurteilung des Inhaltes des Flüssigkeitsbehälters zu ermöglichen, kann durch die Auswerteelektronik auch die Hüllkurve eines oder mehrere Echosignale bewertet werden.

Um die von der Messanordnung erfassten Werte, insbesondere Laufzeit, Phase und Frequenz der Abfrage- und Antwortsignale mit weiteren Werten verknüpfen zu können, kann die Auswerteelektronik mit einem Rechner, insbesondere einem Fahrzeugrechner verbindbar sein.

Um die verschiedenen Rückschlüsse aus den einzelnen Werten ermitteln zu können, kann die Auswerteelektronik die Amplitude und/oder die Steigung und/oder die Breite und/oder Laufzeit, Phase und Frequenz eines Echosignals erfassen.

Besonders vorteilhaft lässt sich das erfindungsgemäße Füllstandsmeßsystem bei einem Kraftstofftank einsetzten. Andere Einsatzmöglichkeiten sind ebenfalls denkbar, beispielsweise bei einem Heizöltank, bei dem neben dem korrekten Füllstand auch der Verschmutzungsgrad oder der Anteil des Wassers in dem Heizöl bestimmt werden muss.

Eine weitere Einsatzmöglichkeit des erfindungsgemäßen Füllstandsmeßsystems besteht darin, den Ölstand in einer Brennkraftmaschine festzustellen.

Um auch hier eine von Erschütterungen, Stößen usw. unabhängige Messung zu ermöglichen, kann in dem Peilstabrohr ein zweites Rohr mit Durchbrechungen eingesetzt werden, das zur Beruhigung des Ölstandes dient und in dessen Innenraum die Messung stattfindet. Auch kann der Füllstand in Behältern mit flüssigem Additiv zur Rußbeseitigung aus Abgasen, insbesondere von Dieselmotoren, gemessen werden.

### [Beispiele]

Anhand der Figuren wird an einem Ausführungsbeispiel die Erfindung noch näher erläutert.

Es zeigt
- Fig. 1: ein Ausführungsbeispiel für eine Anordnung der Messvorrichtung in einem als Kraftstofftank ausgebildeten Behälter;
- Fig. 2: ein Blockschaltbild zur Erläuterung des Betriebs der Messanordnung;
- Fig. 3: unterschiedliche Formen von Antwortsignalen (Echosignalen);
- Fig. 4: eine schematische Querschnittsansicht eines weiteren Ausführungsbeispiels einer Füllstandsmessanordnung eines Flüssigkeitsbehälters; und
- Fig. 5: eine graphische Darstellung eines durch das erfindungsgemäße Füllstandsmeßsystem abgegebenen Sendeimpuls und der durch das Meßsystem erfassten Echosignale.

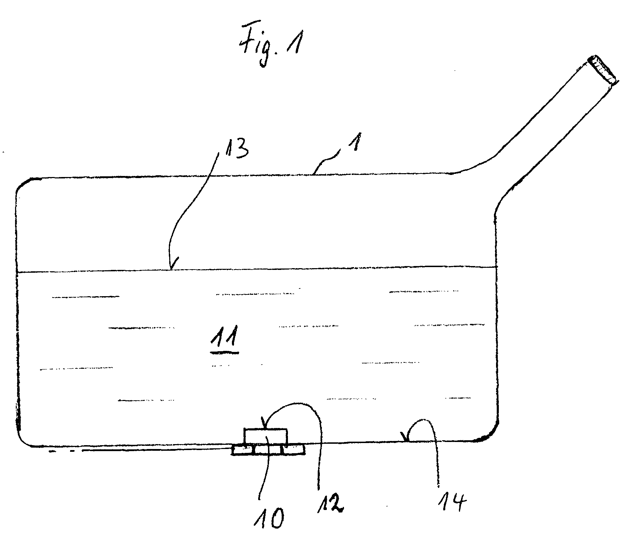

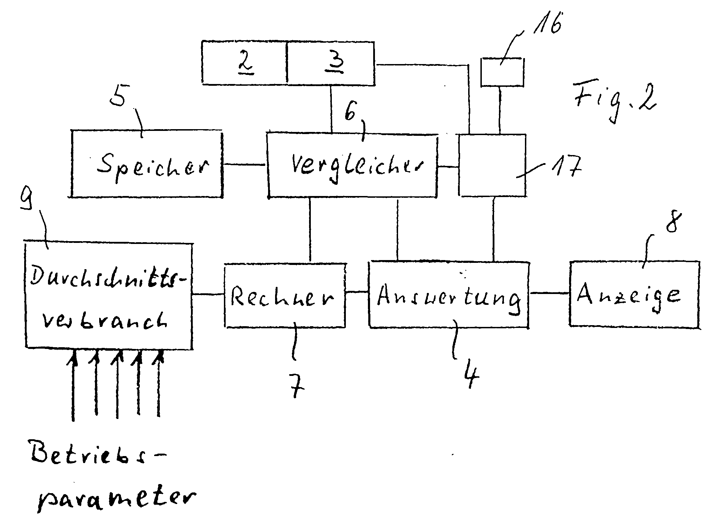

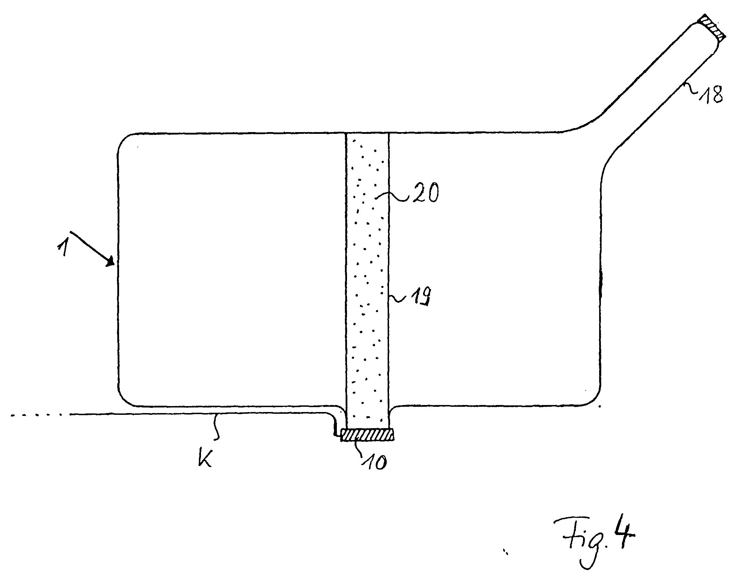

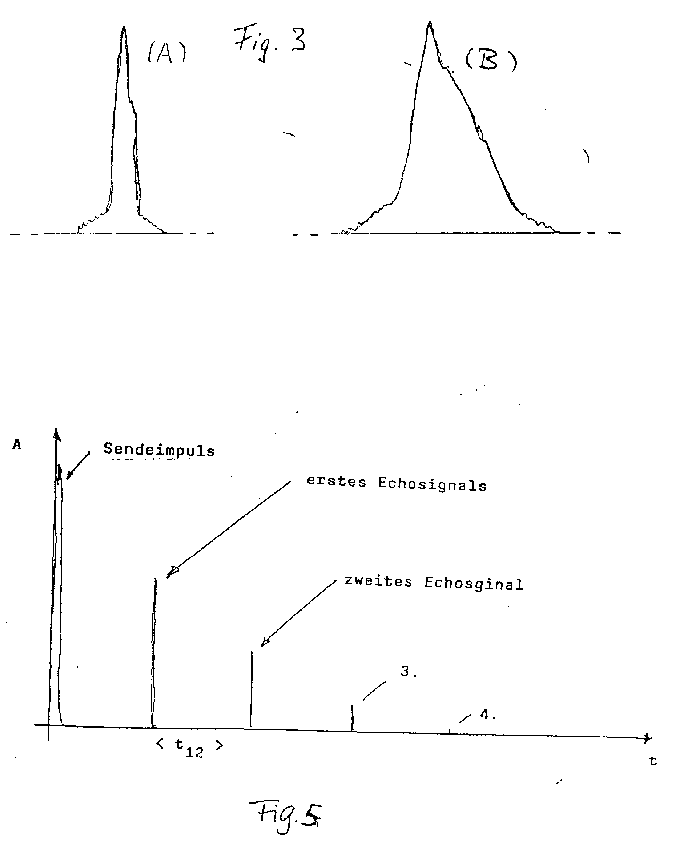

In den Fig. 1 und 4 sind Behälter 1, welche als Kraftstofftanks für Kraftfahrzeuge, insbesondere Nutzfahrzeuge ausgebildet sind, dargestellt. Im Boden, insbesondere in der Mitte des Bodens, ist eine Messanordnung 10, welche einen Sender 2 für ein Abfragesignal und einen Empfänger 3 für ein Antwortsignal (Fig. 2) enthält, flüssigkeitsdicht eingesetzt. In der Messanordnung 10 können ferner noch weitere elektronische Einrichtungen enthalten sein, die unter Bezugnahme auf Fig. 2 noch näher erläutert werden. Die Messanordnung ist in den Behälterboden so eingesetzt, dass sie mit einer bestimmten Höhe in eine Flüssigkeit 11 ragt, deren Füllstand (Pegel) im Behälter 1 gemessen wird. Bei dem in Figur 1 dargestellten Kraftstofftank ragt die Oberseite 12 der Messanordnung 10, von welcher die Abfragesignale ausgesendet und an welcher die Antwortsignale empfangen werden, so weit in die Flüssigkeit 11, dass sie über Ablagerungen (Sumpf), welche sich aus der Flüssigkeit 11 am Boden des Behälters 1 absetzen, ragt.

Die Messanordnung 10 beinhaltet, wie schon erläutert, den Sender 2 und den Empfänger 3. An den Empfänger 3 ist ein Vergleicher 6 angeschlossen. Der Vergleicher 6 vergleicht die vom Empfänger 3 empfangenen Antwortsignale mit in einem Speicher 5 gespeicherten Antwortsignalen. Dieser Vergleich bildet ein Ausführungsbeispiel für eine Überprüfung der Messwerte auf Plausibilität. Die im Speicher 5 gespeicherten Antwortsignale entsprechen bestimmten unterschiedlichen Füllständen der Flüssigkeit 11 im Behälter 1, wenn die Flüssigkeit 11 in diesem Behälter einen bestimmten Betriebszustand aufweist. Dieser Betriebszustand ist dann gegeben, wenn die Flüssigkeitsoberfläche 13 in allen Bereichen von einem Nullpegel 14, welcher der Behälterboden sein kann, einen gleichen Abstand hat. In diesem Betriebszustand besitzt der Nullpegel 14 bzw. der Behälterboden sowie die Flüssigkeitsoberfläche 13 eine im wesentlichen waagrechte Position. Die im Speicher 5 gespeicherten Antwortsignalen entsprechen unterschiedlichen Füllständen für diesen Betriebszustand, für welchen die Messwerte als plausible Messwerte beurteilt werden. Wenn das jeweils empfangene Antwortsignal einem der im Speicher 5 gespeicherten Antwortsignale entspricht, wird von einer an den Speicher angeschlossenen Auswerteeinrichtung 4 ein Anzeigesignal gebildet, das den Füllstand angibt, welches den im Speicher 5 gespeicherten verglichenen Antwortsignal entspricht. Dieses Signal wird an eine Anzeigeeinrichtung 8 weitergegeben. Die Anzeigeeinrichtung 8 findet sich außerhalb der Messanordnung 10, beispielsweise an einer Armaturentafel eines Kraftfahrzeugs.

Wenn das empfangene Antwortsignal mit keinem der im Speicher 5 gespeicherten Antwortsignale übereinstimmt, liegt kein plausibler Messwert vor. Es wird eine Prognoseroutine durchgeführt, bei welcher eine Berechnung des Flüssigkeitsverbrauchs während des fortlaufenden Betriebs in einem Prognoserechner 7 erfolgt. Bei dieser Verbrauchsberechnung wird ein jeweiliger Durchschnittsverbrauchswert in einem Verbrauchsrechner 9 ermittelt. Beispielsweise können für das Kraftfahrzeug für die Fahrt in der Ebene, für die Bergfahrt oder für eine Talfahrt unterschiedliche maximale Durchschnittswerte des Verbrauchs gespeichert sein. Diese Durchschnittswerte können ferner abhängig sein von der Fahrgeschwindigkeit, von der Drehzahl des Kraftfahrzeugmotors und/oder von dem jeweiligen Gang, in welchen das Schaltgetriebe geschaltet ist und von weiteren vom Bordcomputer abrufbare Parametern. Der Verbraucherrechner 9 bestimmt in Abhängigkeit von den jeweiligen Betriebszuständen den entsprechenden betriebsbezogenen Durchschnittswert für den Verbrauch. Im Prognoserechner 7 wird der jeweilige Verbrauch in Abhängigkeit von diesem Durchschnittswert für die Zeitdauer, während der nicht plausible Messwerte vorliegen, der jeweilige Verbrauch der Flüssigkeit berechnet und von dem im Prognoserechner 7 festgehaltenen letzten aus einem plausiblen Messwert ermittelten Füllstandswert abgezogen, bei welchem das empfangene Antwortsignal mit einem der im Speicher 5 gespeicherten Antwortsignale übereinstimmte. Für den so ermittelten Füllstand wird in der an den Prognoserechner 7 angeschlossenen Auswerteeinrichtung 4 ein Anzeigesignal gebildet, das von der Anzeigeeinrichtung 8 angezeigt wird.

Sobald im Vergleicher 6 eine Übereinstimmung zwischen einem empfangenen Antwortsignal und einem der im Speicher 5 gespeicherten Antwortsignale, d.h. ein plausibler Messwert festgestellt wird, wird der Füllstand, welcher diesem gespeicherten Antwortsignal entspricht, durch die Anzeigeeinrichtung 8 angezeigt. Dieser Füllstand ist dann bei einer erneuten Abweichung des Betriebs, von dem in der Fig. 1 dargestellten ruhigen Betrieb der neue Bezugswert, von welchem der im Prognoserechner 7 berechnete Verbrauch abgezogen wird.

Auf diese Weise gewinnt man auch bei unruhiger Fahrt, bei welcher die Flüssigkeitsoberfläche 13 in Bewegung ist oder bei welcher der Nullpegel 14 (Behälterboden) gegenüber der Flüssigkeitsoberfläche 13 schräg angeordnet ist, eine dem tatsächlichen Tankinhalt (Flüssigkeitsvolumen) entsprechendes Anzeigesignal.

Die Auswerteeinrichtung 4 kann in die Baueinheit der Messanordnung 10 integriert sein. Die Anzeigesignale werden dann über eine Signalleitung 15 zu dem entsprechenden Bordinstrument oder zum Bordcomputer weitergeleitet. Es ist jedoch auch möglich die Auswerteeinrichtung 4 und weitere Elemente der Messelektronik im Bordcomputer des Fahrzeugs vorzusehen.

Die in der Figur 2 gezeigte Vorrichtung beinhalte ferner eine Diagnoseeinrichtung 17, welche an den Empfänger 3 sowie an eine Temperaturmesseinrichtung 16 angeschlossen ist. Die Temperaturmesseinrichtung 16 ermittelt die im Tank herrschende Temperatur. Die Diagnoseeinrichtung 17 erhält vom Vergleicher 6 die Information, dass ein plausibles Antwortsignal vorliegt. Diese Signal wird dann im Hinblick auf die Qualität bzw. den Zustand des Tankinhaltes ausgewertet. Wenn beispielsweise Wasser im Tank vorhanden ist, resultiert hieraus eine Verbreiterung des Antwortsignals, insbesondere im Bereich des Signalfußes. Durch die zusätzliche Temperaturmessung lässt sich dann bestimmen, ob das Wasser im gefrorenen Zustand oder im flüssigen Zustand im Tank vorliegt. Gegebenenfalls können noch andere Kriterien wie beispielsweise die Steigung der Abfallflanke des Antwortsignals oder die Abstände der zu einem bestimmten Abfragesignal gehörenden Antwortsignale (Echosignale) in der Diagnoseeinrichtung ausgewertet werden. Ferner können Unebenheiten und Schwankungen im Signalverlauf auf abgelagerte Feststoffe im Tank einen Hinweis geben. Die in der Figur 3 mit (A) bezeichnete Signalform entspricht einer Antwortsignalform bei normalem Zustand des Tankinhaltes. Die in Figur 3 (B) gezeigte Signalform ist durch im Tank befindliches Wasser verbreitert und enthält zusätzliche Signalspitzen (Echos), die durch das Wasser verursacht sind. Mit Hilfe der Temperaturmesseinrichtung 16 lässt sich feststellen, ob das Wasser in flüssigem Zustand oder als Eis vorliegt. Bei einer Temperatur unter dem Gefrierpunkt liegt das Wasser als Eis vor und bei einer Temperatur oberhalb des Gefrierpunktes als Flüssigkeit.

In Fig. 5 ist schematisch ein Laufzeitdiagramm mit vier Echosignalen wiedergegeben. Hierbei ist die Amplitude A über der Zeit t abgetragen. Am linken Rand der Figur 5 ist der Sendeimpuls wiedergegeben. Dieser Sendeimpuls (Abfragesignal) erzeugt mehrere Echosignale (Antwortsignale), deren Amplitude mit der Laufzeit unterschiedlich ist, insbesondere abnimmt, wie es in Figur 5 für das erste bis vierte Echosignal dargestellt ist. Wird über die Echosignale eine Hüllkurve gelegt, so kann hieraus eine genaue Beurteilung des Inhaltes und des Zustandes des Kraftstofftankes abgeleitet werden.

Beim Ausführungsbeispiel der Figur 4 ist über der Messanordnung 10 ein Steigrohr 19 angeordnet, welches sich vertikal nach oben erstreckt. Das Steigrohr 19 besitzt einen kreisförmigen Querschnitt und ist mit einer insbesondere feinen Lochung 20 versehen, über die die in dem Behälter 1 befindliche Flüssigkeit in das Innere des Steigrohres 19 gelangen kann. Durch das Steigrohr 19 ist eine beruhigte Zone zum Messen des Füllstandes der Flüssigkeit im Behälter 1, insbesondere beim Befüllen durch einen Einfüllstutzen 18.

Die Messanordnung, welche auch die Auswerteinrichtung 4 enthalten kann, ist über ein Kabel K mit einer Spannungsquelle verbunden. Darüber hinaus kann noch eine Schnittstellenleitung vorgesehen sein, die die Auswerteelektronik mit einem weiteren Rechner, insbesondere einem Fahrzeugrechner verbindet.

### [Bezugszeichenliste]

- 1: Behälter
- 2: Sender
- 3: Empfänger
- 4: Auswerteeinrichtung
- 5: Speicher
- 6: Verqleicher
- 7: Prognoserechner
- 8: Anzeigeeinrichtung
- 9: Verbrauchsrechner
- 10: Messanordnung
- 11: Flüssigkeit
- 12: Oberseite der Messanordnung
- 13: Flüssigkeitsoberfläche
- 14: Nullpegel
- 15: Signalleitung
- 16: Temperaturmesseinrichtung
- 17: Diagnoseeinrichtung
- 18: Einfüllstutzen
- 19: Steigrohr
- 20: Lochung

## Patentansprüche

1. Verfahren zum Messen eines durch Betriebsverbrauch sich ändernden Füllstandes einer Flüssigkeit in einem Behälter, bei dem
- in bestimmten zeitlichen Abständen ein Abfragesignal in das Behälterinnere gesendet und ein Antwortsignal empfangen wird,
- das Antwortsignal für die Bestimmung der Füllstandsanzeige ausgewertet und
- ein dem Füllstand entsprechendes Anzeigesignal gebildet und angezeigt wird,
**dadurch gekennzeichnet, dass**
- ein jeweils empfangenes Antwortsignal überprüft wird, ob es ein plausibles Meßsignal ist, und bei Vorliegen eines plausiblen Meßsignal ein entsprechender Füllstand angezeigt wird, und
- bei Bewertung eines empfangenen Antwortsignals als nicht plausibles Meßsignal eine Prognoseroutine für den Betriebsverbrauch solange durchgeführt wird bis ein empfangenes Antwortsignal als plausibles Meßsignal bewertet wird.

2. Verfahren nach Anspruch 1, **dadurch gekennzeichnet, dass**
- ein jeweils empfangenes Antwortsignal mit gespeicherten Antwortsignalen, die bestimmten Füllständen entsprechen, verglichen wird, und
- im Falle einer Übereinstimmung eines empfangenen Antwortsignales mit einem gespeicherten Antwortsignal, das dem Füllstand dieses gespeicherten Antwortsignales entsprechende Anzeigesignal gebildet wird, und
- im Falle einer Nichtübereinstimmung des empfangenen Antwortsignales mit den gespeicherten Antwortsignalen aus einem betriebsabhängigen Durchschnittsverbrauch der Flüssigkeit der Verbrauch errechnet wird und fortlaufend solange vom zuletzt bei Übereinstimmung der verglichenen Antwortsignale bestimmten Füllstand subtrahiert und ein entsprechendes Anzeigesignal für den Füllstand gebildet wird, bis beim Antwortsignalvergleich eine Übereinstimmung festgestellt wird.

3. Verfahren nach Anspruch 1, **dadurch gekennzeichnet, dass** bei einer von der horizontalen Bewegung abweichenden Bewegung des Kraftfahrzeugs der Füllstand in Abhängigkeit von der zurückgelegten Wegstrecke ausgehend von dem durch den zuletzt mittels der Messsignale bestimmten Füllstand durch rechnergestützte Extrapolation ermittelt und angezeigt wird.

4. Verfahren nach ein der Ansprüche 1 bis 3, **dadurch gekennzeichnet, dass** aus der Form des Antwortsignals eine Information über den Zustand des Tankinhaltes gebildet wird.

5. Verfahren nach einem der Ansprüche 1 bis 4, **dadurch gekennzeichnet, dass** die Amplitude und/oder Steigung und/oder Breite und/oder zusätzliche Signalspitzen der als Messsignale ausgewerteten reflektierten Empfangsimpulse für eine Zustandsbewertung des Tankinhalts erfasst werden.

6. Verfahren nach Anspruch 4 oder 5, **dadurch gekennzeichnet, dass** aus der Breite des Antwortsignals die Information über das Vorhandensein von Wasser im Tank gebildet wird.

7. Verfahren nach einem der Ansprüche 4 bis 6, **dadurch gekennzeichnet, dass** eine zusätzliche Temperaturmessung zur Bestimmung des Zustandes (Flüssigkeit oder Eis) des im Tank befindlichen Wassers durchgeführt wird.

8. Verfahren nach einem der Ansprüche 1 bis 7, **dadurch gekennzeichnet, dass** das als plausibles Messsignal bewertete Antwortsignal zur Informationsgewinnung über den Zustand des Tankinhaltes verwendet wird.

9. Vorrichtung zum Messen eines durch Betriebsverbrauch sich ändernden Füllstandes einer Flüssigkeit in einem Behälter (1) mit
- einem Sender (2) zum Aussenden eines Abfragesignals in den Behälter (1),
- einem Empfänger (3) zum Empfangen eines vom Abfragesignal im Behälter (1) erzeugten Antwortsignales und
- einer Auswerteeinrichtung (4) zur Bildung eines Anzeigesignals für den Füllstand aus dem jeweils empfangenen Antwortsignals,
**gekennzeichnet durch**
- eine Bewertungseinrichtung (5, 6), welche die Plausibilität eines empfangenen Antwortsignals in Abhängigkeit von der Signalform bewertet, und
- einen an die Auswerteeinrichtung (4) angeschlossenen Prognoserechner (7), welcher aus einem betriebsabhängigen Durchschnittsverbrauch in jeweiligen bestimmten Zeitintervallen die verbrauchte Flüssigkeitsmenge errechnet, wobei
- die Auswerteeinrichtung (4) entweder bei Bewertung eines empfangenen Antwortsignals als plausibles Meßsignal das Anzeigesignal für den dem gespeicherten Antwortsignal entsprechenden Füllstand bildet oder bei Bewertung des empfangenen Antwortsignals als nicht plausibler Messwert die im Prognoserechner (7) errechnete jeweils verbrauchte Flüssigkeitsmenge vom letzten aus einem plausiblen Messwert ermittelten Füllstand für die Bildung des Anzeigesignals subtrahiert.

10. Vorrichtung nach Anspruch 9, **dadurch gekennzeichnet, dass** der Durchschnittsverbrauch in Abhängigkeit von einem oder mehreren der Betriebszustände Bergfahrt, Talfahrt, ebene Fahrt, Motordrehzahl, im Schaltgetriebe eingelegter Gang, Fahrgeschwindigkeit und sonstige vom Bordcomputer des Fahrzeugs betriebsbezogene Parameter bestimmt ist.

11. Vorrichtung nach einem der Ansprüche 9 oder 10, **dadurch gekennzeichnet, dass** das Abfragesignal und das Antwortsignal akustische Signale sind.

12. Vorrichtung nach einem der Ansprüche 9 bis 11, **dadurch gekennzeichnet, dass** ein Oberseite (12) der Messanordnung (10), welche das Abfragesignal aussendet und das Antwortsignal empfängt, mit einer bestimmten Höhe in das Behälterinnere ragt.

13. Vorrichtung nach einem der Ansprüche 9 bis 12, **dadurch gekennzeichnet, dass** die Messanordnung elektroakustische Wandler für den Sender (2) und den Empfänger (3) aufweist.

14. Vorrichtung nach Anspruch 13, **dadurch gekennzeichnet, dass** der Wandler aus einem piezoelektrischen Stoff besteht.

15. Vorrichtung nach einem der Ansprüche 9 bis 14, **dadurch gekennzeichnet, dass** die Messanordnung (10) in einer Bodenwand des Flüssigkeitsbehälters (1) eingebaut ist.

16. Vorrichtung nach einem der Ansprüche 9 bis 15, **dadurch gekennzeichnet, dass** über der Messanordnung (10) ein sich vorzugsweise bis zu der Deckwand des Flüssigkeitsbehälters (1) erstreckendes Steigrohr (19) vorgesehen ist.

17. Vorrichtung nach Anspruch 16, **dadurch gekennzeichnet, dass** das Steigrohr (19) mit einer Lochung (20) versehen ist.

18. Vorrichtung nach Anspruch 16 oder 17, **dadurch gekennzeichnet, dass** das Steigrohr (30) einen Innendurchmesser aufweist, der in etwa dem Außendurchmesser der Messanordnung (10) entspricht.
